# FASCICULE DE BREVET EUROPEEN

(11) **EP 1 737 682 B1**
(45) Date de publication et mention de la délivrance du brevet: **18.08.2010**
(21) Numéro de dépôt: 05716352.9
(22) Date de dépôt: 24.03.2005
(51) Int. Cl.: B60C 13/00

(54) **PNEUMATIQUE MUNI D'UN CAPTEUR DE DÉFORMATIONS, ÉVALUATION DE LA FLÈCHE D'UN PNEUMATIQUE**
REIFEN MIT EINEM VERFORMUNGSSENSOR UND REIFENEINFEDERUNGSBEWERTUNGSVERFAHREN
TYRE COMPRISING A DEFORMATION SENSOR AND TYRE DEFLECTION EVALUATION METHOD

(30) Priorité: 09.04.2004 FR 0403814
(43) Date de publication de la demande: 03.01.2007
(73) Titulaire: Société de Technologie Michelin, 63000 Clermont-Ferrand (FR); Michelin Recherche et Technique S.A., 1763 Granges-Paccot (CH)
(72) Inventeur: DEMAIE, Heathcliff, F-63000 Clermont-Ferrand (FR); GOUGNAUD, Patrick, F-63320 Saint Vincent (FR); LION, Mickaël, F-63000 Clermont-Ferrand (FR); POULBOT, Valéry, F-63430 Les Martres d'Artières (FR)
(74) Mandataire: Dequire, Philippe Jean-Marie Denis
(86) Numéro de dépôt international: PCT/EP2005/003146
(87) Numéro de publication internationale: WO 2005/108123

(56) Documents cités:
- EP-A- 0 937 615
- EP-A- 1 186 853
- WO-A-02/057711
- FR-A- 2 835 919
- US-A1- 2003 056 579

## Description

L'invention concerne un pneumatique muni d'un capteur capacitif et un procédé d'évaluation de la flèche d'un pneumatique.

Plus précisément, l'invention concerne un pneumatique muni d'un capteur capacitif comportant deux électrodes sensiblement parallèles, le capteur capacitif étant porté par un flanc du pneumatique. Document EP 0 937 615 montre un tel pneumatique selon le préambule de la revendication 1.

On appelle « flèche d'un pneumatique » l'amplitude de la déformation verticale du pneumatique soumis à une charge. La mesure de la flèche permet de connaître approximativement la charge subie par le pneumatique, à pression de gonflage donnée. Or, la charge subie par un pneumatique est un paramètre important car un dépassement de la charge maximale recommandée peut nuire à l'endurance du pneumatique. On utilise généralement la charge maximale pour laquelle le pneumatique est conçu, sur des pneumatiques de grandes dimensions, par exemple sur les pneumatiques équipant les poids lourds ou les engins de génie civil, pour connaître les limites de chargement.

Lors d'une phase de roulage, le pneumatique subit des efforts selon trois directions :
- un effort vertical, ou effort radial, sous l'effet de la charge imposée par le véhicule,
- un effort horizontal orienté selon la direction de roulage, aussi appelé effort de cisaillement orthoradial, créé par un couple appliqué au pneumatique, par exemple sous l'effet de l'accélération du véhicule, et
- un effort horizontal perpendiculaire à la direction de roulage, aussi appelé effort de cisaillement axial, créé par une mise en dérive du pneumatique, par exemple lorsque le véhicule est en virage.

En un point donné du pneumatique, la direction orthoradiale désigne la direction perpendiculaire à l'axe et à un rayon passant par le point.

On connaît déjà, dans l'état de la technique, notamment dans le document WO 02/057711, un pneumatique muni d'un capteur capacitif comportant deux électrodes sensiblement parallèles disposées radialement sur un flanc du pneumatique. La valeur de la capacité d'un tel capteur varie en fonction de la distance entre les deux électrodes. Par conséquent, en rendant solidaire un tel capteur d'un flanc du pneumatique, le signal fourni par le capteur est fonction des déformations du flanc du pneumatique.

Le capteur de l'état de la technique est sensible de manière équivalente aux trois efforts précités subis par le pneumatique. En effet, les variations du signal fourni par le capteur dues à chacun des trois efforts sont du même ordre de grandeur.

Le signal dépend donc des contributions élémentaires de chaque effort. Les méthodes actuelles permettent alors de déterminer l'extension circonférentielle du pneumatique à partir de laquelle sont déduites de manière empirique les valeurs des efforts subits par le pneumatique ainsi que sa flèche, notamment au moyen de réseaux de neurones.

Ces méthodes donnent des résultats satisfaisants, mais elles sont complexes à mettre en oeuvre. Ainsi, dans les applications dans lesquelles seule une mesure de la flèche du pneumatique est recherchée, les méthodes connues ne sont pas appropriées.

Signalons encore la demande de brevet EP1186853 qui protège une disposition qui mesure les déformations du flanc à partir de capteurs externes aux pneumatiques. Deux grandeurs semblent accessibles à partir d'une telle disposition : la déradialisation des fils de carcasse renforçant le flanc d'un pneumatique et la distance entre les capteurs et le flanc. Aucune application à la mesure de la flèche n'est évoquée dans ce document, dans l'objectif limitation précise n'est donnée sur la position de ces capteurs externes.

L'invention a pour but de remédier à ces inconvénients en fournissant un pneumatique muni d'un capteur capacitif permettant d'obtenir de manière simple une mesure de sa flèche.

L'invention est définie par les revendications ci-jointes.

En d'autres termes, le pneumatique selon l'invention fournit un signal qui L'invention sera mieux comprise à la lecture de la description qui va suivre, donnée uniquement à titre d'exemple et faite en se référant aux dessins annexés dans lesquels :
- la figure 1 est un schéma représentant un pneumatique muni d'un capteur de déformations ;
- la figure 2 est un schéma en coupe radiale d'un pneumatique à vide ;
- la figure 3 est un schéma en coupe radiale d'un pneumatique sous charge ;
- la figure 4 est un schéma en perspective d'un capteur bifil ;
- la figure 5 est un schéma en coupe d'un pneumatique muni d'un capteur bifil ;
- la figure 6 est un schéma en coupe d'un pneumatique sous charge muni d'un capteur bifil ;
- la figure 7 est un graphique représentant le signal que fournit le capteur bifil lors d'une révolution d'un pneumatique équipé de ce capteur ;
- la figure 8 est un schéma en coupe d'un pneumatique muni d'un capteur de déformations selon un autre mode de réalisation.

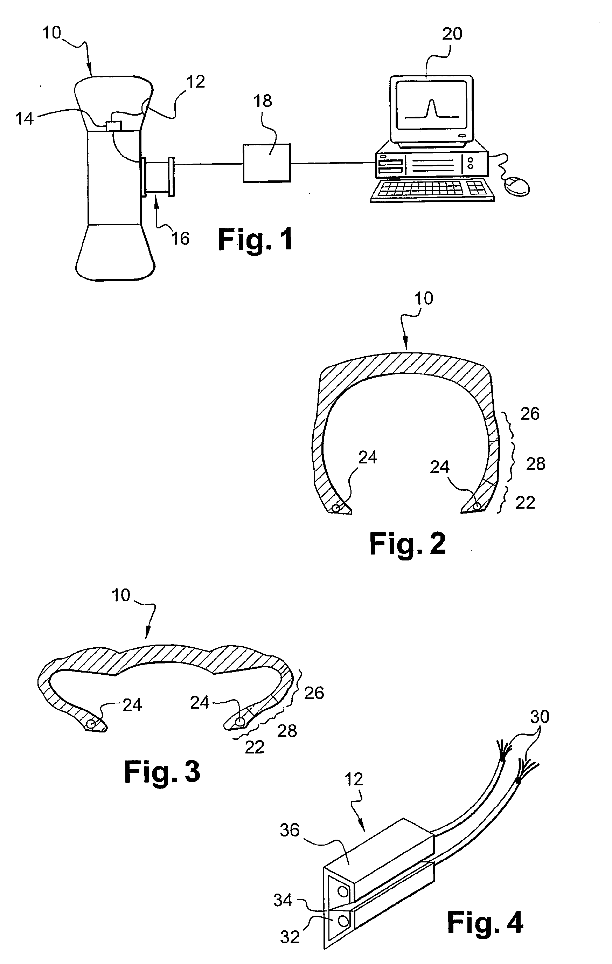

Un pneumatique en gomme désigné par la référence générale 10, équipé avec un dispositif permettant une mesure de la flèche, est représenté sur la figure 1. Ce pneumatique est un pneumatique de voiture mais l'invention peut être mise en oeuvre sur n'importe quel type de pneumatique.

On appelle bande de roulement la partie du pneumatique destinée à être en contact avec une route lors d'une utilisation normale du pneumatique. On appelle flèche d'un pneumatique, l'amplitude de la déformation verticale du pneumatique soumis à une charge.

Ce dispositif de mesure de flèche comporte un capteur de déformations 12 disposé sur le flanc du pneumatique, un boîtier de mesure 14 recueillant les informations du capteur de déformations 12, un collecteur tournant 16 permettant de transmettre ces informations à un boîtier d'acquisition 18 relié à un dispositif de traitement 20 qui fournit une mesure de la flèche en fonction des données recueillies.

Ce dispositif de traitement 20 est par exemple un calculateur.

Le capteur de déformation peut être disposé en n'importe quel point du flanc, aussi bien sur le flanc intérieur que sur le flanc extérieur du pneumatique.

Le flanc du pneumatique 10 peut être décomposé en trois zones représentées sur les figures 2 et 3.

Une première zone, dite zone basse 22 du pneumatique 10, est située sur la partie du flanc la plus interne. Cette zone basse, qui est généralement constituée d'une gomme très rigide, comporte des tringles en acier 24 dont la fonction est d'assurer la tenue mécanique du pneumatique.

Une seconde zone, dite zone de flexion maximale 26, est située approximativement à l'équateur du pneumatique, c'est-à-dire à l'endroit où il est le plus large. C'est dans cette zone que la flexion du flanc du pneumatique 10 est maximale lorsqu'il est soumis à une charge, comme représenté sur la figure 3.

On distingue enfin une troisième zone, dite zone intermédiaire 28, située entre la zone de flexion maximale 26 et la zone basse 22 du flanc du pneumatique. Cette zone intermédiaire 28 présente l'avantage d'être plus souple et donc de subir des déformations plus grandes que la zone basse 22 du flanc du pneumatique 10, mais d'être moins sensible aux efforts dus à l'accélération et aux virages, que la zone de flexion maximale 26 du flanc.

Il est donc avantageux que le capteur de déformations 12 soit disposé de manière à mesurer la flexion locale dans un plan contenant l'axe du pneumatique 10, de cette zone intermédiaire 28.

Le capteur de déformations utilisé, qui sera décrit ultérieurement, est suffisamment petit pour être situé intégralement dans la zone intermédiaire du flanc.

On appelle aire de contact la zone de la bande de roulement du pneumatique qui est en contact avec la route à un instant donné.

Lorsque le pneumatique est soumis à une charge verticale, les flancs du pneumatique reliant l'aire de contact de la bande de roulement au centre du pneumatique fléchissent. On parle couramment de « ventre de lapin ». On appelle zone du ventre de lapin la partie du flanc du pneumatique qui fléchit. Cette zone du ventre de lapin s'étend sensiblement sur un secteur angulaire mesurant approximativement 60°.

Lorsque le pneumatique muni d'un capteur de déformations est en rotation, le capteur, situé sur la zone intermédiaire du pneumatique, décrit sensiblement un cercle vertical. En particulier, le capteur passe par deux points caractéristiques : le sommet et le point le plus bas de cette trajectoire circulaire.

La flexion est maximale lorsque le capteur est au point le plus bas de sa trajectoire, c'est-à-dire lorsqu'il est situé au milieu de la zone du ventre de lapin.

Sur le reste de la trajectoire, la partie du flanc du pneumatique sur laquelle le capteur est situé est sensiblement au repos. Le flanc du pneumatique est au repos sur un secteur angulaire mesurant approximativement 300°.

Au cours d'une rotation du pneumatique, la valeur de la flexion locale du flanc du pneumatique évolue continûment entre les deux valeurs extrêmes. Elle croît lorsque le capteur évolue depuis l'entrée dans la zone du ventre de lapin jusqu'au milieu de cette zone et décroît depuis le milieu de la zone du ventre de lapin jusqu'à la sortie de cette zone.

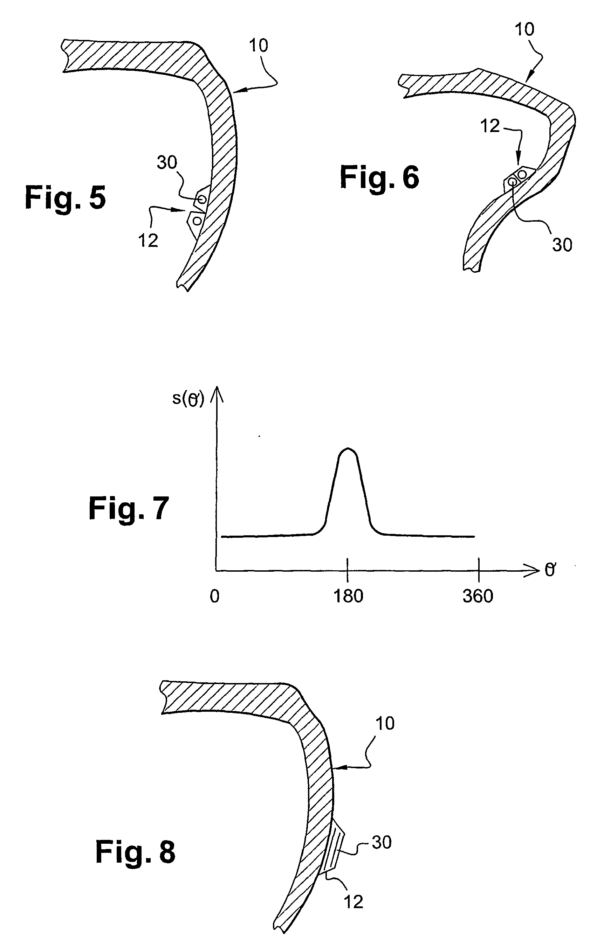

Le signal s(θ) fourni par le capteur de déformations 12 au cours de la rotation du pneumatique 10 est donc un signal périodique de période 360°. Ce signal est représenté en fonction de l'angle θ de rotation du pneumatique sur la figure 7.

Dans ce signal périodique, nous nous intéressons plus particulièrement à une valeur du signal s(θ₀) où θ₀ est un angle constant compris entre 0 et 360°, par exemple à la valeur du signal lorsque le capteur est au milieu de la zone du ventre de lapin. Cette valeur correspond en principe à la flexion locale maximale du flanc du pneumatique.

Comme cela a déjà été expliqué, les inventeurs ont constaté que la valeur de la flexion locale maximale est reliée directement à la flèche du pneumatique. Une mesure de la flexion locale maximale permet donc d'obtenir la valeur de la flèche. Pour améliorer la précision de la flèche, il est intéressant de tenir compte de la pression du pneumatique.

La relation entre ces trois données peut être obtenue au moyen d'un réseau de neurones, ou plus simplement au moyen d'une table de valeurs remplie empiriquement.

Dans des conditions d'utilisation normales, le pneumatique ne roule pas sur une chaussée parfaitement plane, et la flexion locale maximale n'est pas toujours obtenue lorsque le capteur est au milieu de l'aire de contact. On peut alors moyenner les résultats en utilisant es mesures de flexion locale pour plusieurs valeurs d'angle de rotation, ou utiliser la valeur de l'intégrale du signal périodique sur une période.

Le capteur de déformations 12 utilisé est un capteur capacitif comportant deux électrodes filaires parallèles. On parle de capteur bifil. Ce capteur bifil comporte deux fils 30 conducteurs parallèles souples noyés dans un corps élastomérique 32 formant un diélectrique. Ce capteur agit comme un condensateur dont la capacité varie en fonction de l'écartement des deux fils 30. Lorsque le capteur 12 subit des déformations, l'écart entre les deux fils varie, et le signal qu'il fournit varie donc également.

Les fils conducteurs sont souples en flexion pour ne pas perturber le fonctionnement mécanique du pneumatique et ne pas nuire à l'endurance du pneumatique.

Le capteur bifil est relié au boîtier de mesure 14 au moyen de câbles blindés de manière que la variation de distance entre les câbles ne modifie pas la valeur de la capacité du capteur qui est mesurée grâce au boîtier de mesure 14.

Pour améliorer la sensibilité aux déformations de ce capteur bifil, ce dernier comporte une fente 34 dans le corps élastomérique située entre les deux fils 30, parallèlement à chacun d'entre eux. Cette fente permet de faciliter les déplacements d'un fil par rapport à l'autre.

Ce capteur 12 est utilisé pour mesurer la flexion locale du flanc du pneumatique 10 dans un plan contenant l'axe du pneumatique 10. Le capteur 12 du pneumatique est donc disposé en saillie du pneumatique 10, de telle manière que les fils 30 de ce capteur sont sensiblement compris dans un plan perpendiculaire à l'axe du pneumatique et sont sensiblement orientés selon une direction orthoradiale.

Ainsi, lorsque la partie du flanc du pneumatique sur laquelle le capteur 12 est positionné est au repos, comme représenté sur la figure 5, le capteur bifil est lui aussi au repos et les deux fils 30 sont espacés. Lorsque la partie du flanc du pneumatique sur laquelle est positionné le capteur est sous charge, comme représenté sur la figure 6, sa déformation rapproche les deux fils 30 du capteur bifil 12. On constate alors que la fente 34 située dans le corps élastomérique 32 du capteur bifil 12 se réduit.

Au cours de la rotation du pneumatique 10, le capteur bifil 12 évolue donc périodiquement entre une position en flexion et une position au repos.

Par ailleurs, le capteur de déformations peut être muni d'une enveloppe 36 conductrice souple reliée à un potentiel fixe de telle manière que les perturbations électromagnétiques sont atténuées. En particulier, on peut noyer des particules conductrices dans la gomme du pneumatique pour former cette enveloppe conductrice. Ces particules peuvent être par exemple du noir de carbone ou des particules métalliques.

Selon une variante, représentée sur la figure 8, le capteur bifil 12 est disposé en saillie du flanc du pneumatique 10 de telle manière que les fils 30 du capteur sont sensiblement compris dans un plan contenant l'axe du pneumatique, et sont sensiblement orientés selon une direction radiale. Pour que le capteur bifil ne soit sensible qu'à la flexion, dans un plan contenant l'axe du pneumatique, du flanc du pneumatique, il est indispensable que les fils soient en saillie. Ainsi, lorsque le flanc du pneumatique fléchit, le capteur s'étire et les deux fils se rapprochent. Comme le capteur est en saillie du pneumatique, les efforts de cisaillement dans la gomme du pneumatique n'ont pas d'effet sur l'espacement entre les deux fils, et ce capteur est donc principalement sensible à la flexion.

Bien entendu, toute légère déviation par rapport à la forme et à l'orientation des fils du capteur bifil, par exemple dues aux tolérances de fabrication, est acceptable.

On notera enfin que l'invention n'est pas limitée aux modes de réalisation précédemment décrits, mais aux revendications ci-jointes.

Il est en effet possible que le capteur soit associé à un circuit électronique porté par le pneumatique, capable d'effectuer des traitements embarqués. Grâce au circuit électronique, le capteur peut fonctionner de manière autonome, si bien qu'il n'est plus nécessaire d'utiliser le collecteur tournant, le boîtier d'acquisition ou le dispositif de traitement. Le circuit électronique comprend par exemple des moyens de stockage de mesures ainsi que des moyens d'émission des mesures stockées vers un calculateur du véhicule.

## Revendications

1. Pneumatique (10) muni d'un capteur capacitif (12) comportant deux électrodes (30) sensiblement parallèles, le capteur capacitif étant porté par un flanc du pneumatique, **caractérisé en ce que** les électrodes (30) du capteur sont sensiblement comprises dans un plan perpendiculaire à l'axe de rotation du pneumatique et sont sensiblement orientées selon une direction orthoradiale.

2. Pneumatique (10) selon la revendication 1, dans lequel les électrodes du capteur sont des électrodes filaires.

3. Pneumatique (10) selon la revendication 2, dans lequel les électrodes sont des file de gomme conductrice.

4. Pneumatique (10) selon la revendication 1, dans lequel les électrodes sont des électrodes rubans.

5. Pneumatique (10) selon l'une quelconque des revendications 1 à 4, dans lequel les électrodes sont rectilignes.

6. Pneumatique (10) selon l'une quelconque des revendications 1 à 4, dans lequel les électrodes sont en arc de cercle sensiblement concentrique à l'axe de rotation du pneumatique.

7. Pneumatique (10) selon l'une quelconque des revendications 1 à 6, dans lequel les deux électrodes sont noyées dans un corps élastomérique conformé pour faciliter les déplacements d'une électrode par rapport à l'autre.

8. Pneumatique (10) selon la revendication 7, dans lequel le corps élastomérique comporte une fente entre les deux électrodes.

9. Pneumatique (10) selon l'une quelconque des revendications 1 à 8, dans laque le capteur est muni d'une enveloppe conductrice souple reliée à un potentiel fixe, destinée à limiter les perturbations électromagnétiques.

10. Pneumatique (10) selon la revendication 9, dans lequel l'enveloppe conductrice comporte des particules conductrices noyées dans le corps élastomérique, ces particules conductrices étant par exemple du noir de carbone ou des particules métalliques.

11. Pneumatique (10) selon l'une quelconque des revendications 1 à 10, dans lequel le capteur (12) se trouve sur une partie du flanc du pneumatique située entre une zone basse (22) et une zone de flexion maximale (26).

12. Procédé d'évaluation de la flèche d'un pneumatique (10), **caractérisé en ce:** le pneumatique (10) est selon l'une quelconque des revendications 1 à 11 et en ce **qu**'on mesure la flexion locale, dans un plan contenant l'axe du pneumatique, d'une partie du flanc (28) du pneumatique, au moyen du capteur capacitif (12).

13. Procédé d'évaluation de la flèche d'un pneumatique (10) selon la revendication 12 dans lequel la partie (28) du flanc du pneumatique dont on mesure la flexion locale est située entre une zone basse (22) et une zone de flexion maximale (26).

14. Procédé d'évaluation de la flèche d'un pneumatique (10) selon l'une quelconque des revendications 12 ou 13, dans lequel on mesure en outre la pression du pneumatique.

## Claims

1. Tyre (10) provided with a capacitative sensor (12) comprising two substantially parallel electrodes (30), the capacitative sensor being located on a sidewall of the tyre, **characterised in that** the electrodes (30) of the sensor lie substantially in a plane perpendicular to the rotation axis of the tyre and are substantially orientated in an ortho-radial direction.

2. Tyre (10) according to Claim 1, in which the sensor's electrodes are filamentary electrodes.

3. Tyre (10) according to Claim 2, in which the electrodes are filaments of conductive rubber.

4. Tyre (10) according to Claim 1, in which the electrodes are strip electrodes.

5. Tyre (10) according to any of Claims 1 to 4, in which the electrodes are rectilinear.

6. Tyre (10) according to any of Claims 1 to 4, in which the electrodes are arcs of circles substantially concentric with the rotation axis of the tyre.

7. Tyre (10) according to any of Claims 1 to 6, in which the two electrodes are embedded in an elastomeric body configured so as to facilitate displacements of one electrode relative to the other.

8. Tyre (10) according to Claim 7, in which the elastomeric body comprises a slot between the two electrodes.

9. Tyre (10) according to any of Claims 1 to 8, in which the sensor is provided with a flexible conductive envelope connected to a fixed potential designed to limit electromagnetic interferences.

10. Tyre (10) according to Claim 9, in which the conductive envelope comprises conductive particles embedded in the elastomeric body, these conductive particles being for example carbon black or metallic particles.

11. Tyre (10) according to any of Claims 1 to 10, in which the sensor (12) is located on a part of the sidewall of the tyre between a bottom zone (22) and a zone of maximum flexure (26).

12. Process for evaluating the deflection of a tyre (10), **characterised in that** the tyre is according any one of claims 1 to 11 and **in that** the local bending of part of the sidewall of the tyre (28) in a plane containing the axis of the tyre is measured with the capacitive sensor (12).

13. Process for evaluating the deflection of a tyre (10) according to Claim 12, in which the part of the sidewall of the tyre (28) whose local bending is measured is located between a bottom zone (22) and a zone of maximum flexure (26).

14. Process for evaluating the deflection of a tyre (10) according to either of Claims 12 or 13, in which the pressure of the tyre is also measured.

## Patentansprüche

1. Luftreifen (10), der mit einem kapazitiven Sensor (12) versehen ist, der zwei im Wesentlichen parallele Elektroden (30) aufweist, wobei der kapazitive Sensor von einer Flanke des Luftreifens getragen wird, **dadurch gekennzeichnet, dass** die Elektroden (30) des Sensors im Wesentlichen in einer Ebene lotrecht zur Drehachse des Luftreifens liegen und im Wesentlichen in einer orthoradialen Richtung ausgerichtet sind.

2. Luftreifen (10) nach Anspruch 1, bei dem die Elektroden des Sensors Drahtelektroden sind.

3. Luftreifen (10) nach Anspruch 2, bei dem die Elektroden Drähte aus leitendem Gummi sind.

4. Luftreifen (10) nach Anspruch 1, bei dem die Elektroden Bandelektroden sind.

5. Luftreifen (10) nach einem der Ansprüche 1 bis 4, bei dem die Elektroden geradlinig sind.

6. Luftreifen (10) nach einem der Ansprüche 1 bis 4, bei dem die Elektroden kreisbogenförmig im Wesentlichen konzentrisch zur Drehachse des Luftreifens sind.

7. Luftreifen (10) nach einem der Ansprüche 1 bis 6, bei dem die zwei Elektroden in einen Elastomerkörper eingebettet sind, der gestaltet ist, um die Verschiebungen einer Elektrode bezüglich der anderen zu erleichtern.

8. Luftreifen (10) nach Anspruch 7, bei dem der Elastomerkörper einen Schlitz zwischen den zwei Elektroden aufweist.

9. Luftreifen (10) nach einem der Ansprüche 1 bis 8, bei dem der Sensor mit einer mit einem festen Potential verbundenen, biegsamen leitenden Hülle versehen ist, die bestimmt ist, die elektromagnetischen Störungen zu begrenzen.

10. Luftreifen (10) nach Anspruch 9, bei dem die leitende Hülle leitende Teilchen aufweist, die in den Elastomerkörper eingebettet sind, wobei diese leitenden Teilchen zum Beispiel Russ oder metallische Teilchen sind.

11. Luftreifen (10) nach einem der Ansprüche 1 bis 10, bei dem der Sensor (12) sich in einem Bereich der Flanke des Luftreifens befindet, der zwischen einer unteren Zone (22) und einer Zone maximaler Biegung (26) angeordnet ist.

12. Verfahren zur Schätzung der Einfederung eines Luftreifens (10), **dadurch gekennzeichnet, dass** der Luftreifen (10) nach einem der Ansprüche 1 bis 11 ist, und dass die lokale Biegung, in einer die Achse des Luftreifens enthaltenden Ebene, eines Bereichs der Flanke (28) des Luftreifens mittels des kapazitiven Sensors (12) gemessen wird.

13. Verfahren zur Schätzung der Einfederung eines Luftreifens (10) nach Anspruch 12, bei dem der Bereich (28) der Flanke des Luftreifens, dessen lokale Biegung gemessen wird, sich zwischen einer unteren Zone (22) und einer Zone maximaler Biegung (26) befindet.

14. Verfahren zur Schätzung der Einfederung eines Luftreifens (10) nach einem der Ansprüche 12 oder 13, bei dem außerdem der Druck des Luftreifens gemessen wird.
